# EUROPÄISCHE PATENTSCHRIFT

(11) **EP 4 108 489 B1**
(45) Veröffentlichungstag und Bekanntmachung des Hinweises auf die Patenterteilung: **18.11.2026**
(21) Anmeldenummer: 22179830.9
(22) Anmeldetag: 20.06.2022
(51) Int. Cl.: G01N 21/94, G01N 21/95, B23P 19/04

(54) **PRÜFUNG EINER OBERFLÄCHE EINES KAROSSERIEBAUTEILS AUF VERUNREINIGUNG IM ZUSAMMENHANG MIT EINEM STOFFSCHLÜSSIGEN AUFBRINGEN EINES BAUELEMENTS AUF DAS KAROSSERIEBAUTEIL**
TESTING OF A SURFACE OF A BODY COMPONENT FOR AN IMPURITY IN CONNECTION WITH AN INTEGRAL APPLICATION OF A COMPONENT TO THE BODY PART
MISE À L'ESSAI D'UNE SURFACE D'UN COMPOSANT DE CARROSSERIE POUR LA CONTAMINATION EN RELATION AVEC UNE APPLICATION PAR LIAISON DE COMPLÉMENTARITÉ DE MATIÈRE D'UN COMPOSANT SUR LE COMPOSANT DE CARROSSERIE

(30) Priorität: 22.06.2021 DE 102021206386
(43) Veröffentlichungstag der Anmeldung: 28.12.2022
(73) Patentinhaber: thyssenkrupp Automotive Body Solutions GmbH, 74076 Heilbronn (DE); thyssenkrupp AG, 45143 Essen (DE)
(72) Erfinder: Schneider, Marc, 66636 Tholey (DE)
(74) Vertreter: thyssenkrupp Bilstein GmbH

(56) Entgegenhaltungen:
- EP-A1- 3 450 965
- DE-A1- 102004 045 484
- DE-A1- 102007 036 585
- DE-B3- 102017 221 018

## Beschreibung

Die Erfindung betrifft ein Verfahren zur Prüfung einer Oberfläche eines Karosseriebauteils eines Fahrzeugs im Zusammenhang mit einem stoffschlüssigen Aufbringen eines Bauelements auf das Karosseriebauteil und eine Reinigungsvorrichtung mit einem Reinigungskontaktabschnitt, wobei die Reinigungsvorrichtung ausgebildet ist, einen Oberflächenbereich eines Karosseriebauteils eines Fahrzeugs mit dem Reinigungskontaktabschnitt zu reinigen, insbesondere in Vorbereitung auf das Applizieren eines Bauelements auf dem gereinigten Oberflächenbereich.

Beispielsweise werden Dichtungsprofile auf einem dem Verschließen einer Karosserieöffnung dienenden Karosseriebauteil appliziert, insbesondere um eine dichtende Verbindung zwischen einer Karosserieöffnung und einer in die Öffnung eingesetzten Abdeckung herzustellen. Bei so einer Abdeckung kann es sich beispielsweise um eine Tür, einen Kofferraumdeckel oder ein Schiebedachelement handeln.

Aus der DE 10 2017 221 018 B3 ist eine Applikationsvorrichtung zum Applizieren eines Dichtungsprofils auf ein Karosseriebauteil bekannt, wobei die Applikationsvorrichtung eine Reinigungsvorrichtung umfasst. Dabei wird ein Oberflächenbereich des Karosseriebauteils als Fügestelle zum Aufbringen des Dichtungsprofils festgelegt, der auch Aufnahmefläche genannt wird. Dieser Oberflächenbereich wird dann vor dem Applizieren des Dichtungsprofils mechanisch gereinigt, um Staub zu binden und Schmiermittelrückstände von dem Karosseriebauteil abzutragen und aufzunehmen. Ein angeklebtes Dichtungsprofil hält auf dem Oberflächenbereich dabei zuverlässiger, wenn dieser gereinigt wurde als wenn auf eine Reinigung verzichtet wird.

DE102004045484A1 beschreibt ein Verfahren zur Detektion von Dichtmaterial- und Klebstoffrückständen auf Karosserieoberflächen mittels IR-Sensorik und Visualisierung, ggf. mit automatisierter Reinigung.

EP3450965A1 offenbart ein automatisiertes Inspektionssystem zur Erkennung von Oberflächenanomalien, insbesondere Fremdmaterialien und Rissen, mittels Kameras und variabler Beleuchtung mit Rückkopplungsschleife.

DE102007036585A1 offenbart eine Vorrichtung sowie ein Verfahren zum Auftragen von Dichtmitteln auf Fahrzeugkarosserien mit einer Reinigungs- und Prüfeinrichtung für das Auftragsgerät.

Es hat sich aber gezeigt, dass dennoch schlecht haltende Klebeverbindungen auftreten. Zwar kann die Umlaufgeschwindigkeit des mit der Applikationsvorrichtung verwendeten Reinigungselements erhöht und damit die Intensität der Reinigung angepasst werden. Das führt aber zu einem erhöhten Verbrauch des Reinigungselements und somit zu höheren Betriebskosten.

Vor diesem Hintergrund ist es eine Aufgabe der vorliegenden Erfindung, die Quote von fehlerfrei applizierten Bauelementen, insbesondere die Quote von fehlerfrei auf einem Karosseriebauteil angeklebten Dichtungsprofilen, zu verbessern, und dafür insbesondere eine verbesserte Reinigungsvorrichtung bereitzustellen, die vorteilhafterweise kostengünstig betrieben werden kann.

Zur Lösung dieser Aufgabe werden ein Verfahren zur Prüfung einer Oberfläche eines Karosseriebauteils eines Fahrzeugs auf das Vorhandensein einer Verunreinigung sowie eine Reinigungsvorrichtung gemäß den unabhängigen Ansprüchen vorgeschlagen. Weitere vorteilhafte Ausgestaltungen der Erfindung sind in den abhängigen Ansprüchen und der Beschreibung beschrieben sowie in den Figuren dargestellt.

Die vorgeschlagene Lösung sieht ein Verfahren zur Prüfung einer Oberfläche eines Karosseriebauteils eines Fahrzeugs auf das Vorhandensein einer Verunreinigung vor, insbesondere im Rahmen einer Kraftfahrzeugfertigung, weiter insbesondere im Zusammenhang mit einem stoffschlüssigen Aufbringen eines Bauelements auf das Karosseriebauteil, weiter insbesondere im Zusammenhang mit einem Reinigen der Oberfläche in Vorbereitung auf ein Aufbringen eines Bauelements auf das Karosseriebauteil. Bei dem Verfahren wird ein Oberflächenbereich der Oberfläche als Fügestelle für ein stoffschlüssiges Anbringen eines Bauelements an dem Karosseriebauteil festgelegt, insbesondere für das Aufkleben eines Dichtungsprofils. Der festgelegte Oberflächenbereich wird von einem optischen Sensor erfasst. Der optische Sensor ist vorzugsweise ein bildgebender Sensor, insbesondere ein CCD- oder CMOS-Sensor (CCD: charge-coupled device; CMOS: complementary metal-oxidesemiconductor), dem vorteilhafterweise eine Speichereinheit zur Speicherung von Bildinformation und eine Auswerteeinheit zur Auswertung der erfassten Bildinformation, insbesondere einen Bildverarbeitungsprozessor, zugeordnet sind. Insbesondere ist vorgesehen, dass der optische Sensor eine Kamera ist, weiter insbesondere eine Smart-Kamera. Der von dem optischen Sensor erfasste Oberflächenbereich wird von einer Auswerteeinheit bezüglich eines Vorhandenseins einer Verunreinigung ausgewertet. Vorteilhafterweise wird somit vor dem Applizieren eines Bauelements an dem Karosseriebauteil, insbesondere vor dem Applizieren eines Dichtungsprofils, das Vorhandensein einer Verunreinigung erkannt. Da Verunreinigungen regelmäßig eine gute stoffschlüssige Verbindung, insbesondere eine gute Klebverbindung, zwischen dem Karosseriebauteil und dem zu applizierenden Bauelement verhindern, ist es besonders vorteilhaft, solche Verunreinigungen vor dem Beginn des Fügens zur erkennen, sodass vorteilhafterweise noch vor dem Fügen die Verunreinigung beseitigt und somit schlechte stoffschlüssige Verbindungen, die zu erhöhten Kosten und zur Kundenunzufriedenheit führen, verhindert werden können.

Insbesondere ist vorgesehen, dass der festgelegte Oberflächenbereich sukzessiv von dem optischen Sensor erfasst wird, insbesondere indem der optische Sensor an dem festgelegten Oberflächenbereich entlang geführt wird oder indem das Karosseriebauteil mit dem festgelegten Oberflächenbereich an dem optischen Sensor entlang geführt wird. Der als Fügestelle festgelegte Oberflächenbereich wird insbesondere von dem optischen Sensor on-the-fly erfasst. Insbesondere wird der erfasste Oberflächenbereich von der Auswerteeinheit bezüglich eines Vorhandenseins einer Verunreinigung on-the-fly ausgewertet. Somit kann vorteilhafterweise schnell auf erkannte Verunreinigungen reagiert werden. Insbesondere kann das Applizieren eines Bauelements in dem von der Verunreinigung betroffenen Bereich rechtzeitig verhindert werden.

Gemäß einer besonders vorteilhaften Ausgestaltung des Verfahrens ist vorgesehen, dass der von dem optischen Sensor erfasste Oberflächenbereich bezüglich eines Vorhandenseins von Korrosionsschutzmittelrückständen als Verunreinigung ausgewertet wird. So werden Karosseriebauteile im Rahmen des Fertigungsprozesses eines Fahrzeugs insbesondere mit einem Korrosionsschutz, insbesondere einem wachshaltigen Korrosionsschutzmittel, behandelt. Der als Fügestelle festgelegte Oberflächenbereich eines Karosseriebauteils wird nach einer solchen Behandlung mit einem Korrosionsschutz vorteilhafterweise gereinigt, um das Korrosionsschutzmittel in diesem Oberflächenbereich zu entfernen, weil das Korrosionsschutzmittel eine gute stoffschlüssige Verbindung, insbesondere eine gute Klebverbindung, zwischen dem Karosseriebauteil und dem zu applizierenden Bauelement verhindern würde. Insbesondere da das Aufbringen des Korrosionsschutzmittels einer gewissen Ungleichverteilung unterworfen sein kann, kann es vorkommen, dass nach dem Reinigen des als Fügestelle festgelegten Oberflächenbereichs dennoch Korrosionsschutzmittelrückstände auf dem festgelegten Oberflächenbereich verbleiben. Diese werden vorteilhafterweise mit dem vorgeschlagenen Verfahren erkannt. Die erkannten Korrosionsschutzmittelrückstände werden dann vorteilhafterweise vor dem Applizieren des Bauelements, insbesondere vor dem Applizieren des Dichtungsprofils, entfernt.

Bei einer weiteren vorteilhaften Ausführungsform des Verfahrens wird der von dem optischen Sensor erfasste Oberflächenbereich mit UV-Licht (UV: ultraviolett) bestrahlt. Insbesondere wird der von dem optischen Sensor erfasste Oberflächenbereich mit Licht einer Wellenlänge zwischen 100 nm und 380 nm (nm: Nanometer) bestrahlt. Vorteilhafterweise sind Wachsrückstände, die auf die Behandlung des Karosseriebauteils mit Korrosionsschutzmittel zurückgehen, unter UV-Licht gut mit dem optischen Sensor, insbesondere mit einer Smart-Kamera, erkennbar. Durch den Einsatz von UV-Licht kann somit das Erkennen von Verunreinigungen verbessert werden.

Weiter vorteilhaft ist vorgesehen, dass die Auswerteeinheit, die den von dem optischen Sensor erfassten Oberflächenbereich bezüglich eines Vorhandenseins einer Verunreinigung auswertet, auf bestimmte Muster von Verunreinigungen, insbesondere auf bestimmte Wachsmuster, trainiert. Vorteilhafterweise ist die Auswerteeinheit ausgebildet, insbesondere mittels einer KI (Künstliche Intelligenz) typischerweise auftretende Muster von Verunreinigungen, insbesondere Wachsmuster aufgrund von Korrosionsschutzmittelrückständen, zu erkennen. Vorteilhafterweise ist die Auswerteeinheit dabei selbstlernend ausgebildet. Weiter vorteilhaft wird mit der Auswertung erkannt, was für eine Art von Verunreinigung vorliegt. Vorteilhafterweise kann die Verunreinigung dann gezielter entfernt werden.

Gemäß einer weiteren vorteilhaften Ausgestaltung wird bei der Auswertung ein Flächenanteil einer Verunreinigung an dem von dem Sensor erfassten Oberflächenbereich bestimmt, also vorteilhafterweise ein Wert, der angibt, ein wie großer Anteil des Oberflächenbereichs verunreinigt ist. Der so bestimmte Flächenanteil wird vorteilhafterweise einem Vergleich mit einem vordefinierten Flächenanteil unterzogen. Insbesondere wird ein ermittelter Wert für den verunreinigten Oberflächenbereich mit einem vorgegebenen Referenzwert verglichen. Die Werte können dabei absolute Werte sein, insbesondere Werte für eine Fläche in Quadratzentimetern. Insbesondere ist aber vorgesehen, dass der Flächenanteil einer Verunreinigung an dem von dem Sensor erfassten Oberflächenbereich ein relativer Wert ist, vorzugsweise bezogen auf die Flächengröße des von dem optischen Sensor erfassten Oberflächenbereichs. Der Wert kann insofern insbesondere ein Wert sein, der in einem geschlossenen Intervall mit den Grenzen "0" und "1" liegt.

Insbesondere ist vorgesehen, dass der von dem optischen Sensor erfasste Oberflächenbereich als verunreinigt bewertet wird, wenn bei dem Vergleich der vordefinierte Flächenanteil von dem bestimmten Flächenanteil überschritten wird. In dem Fall, in dem der von dem optischen Sensor erfasste Oberflächenbereich als verunreinigt bewertet wird, wird vorteilhafterweise ein Signal ausgegeben. Insbesondere kann das Signal ein akustisches oder ein visuelles Signal sein, mit welchem auf die Verunreinigung hingewiesen wird. Es ist aber insbesondere auch vorgesehen, dass ein Steuerungssignal ausgegeben wird. Vorteilhafterweise wird mit dem Steuerungssignal eine Reinigungsvorrichtung zur Beseitigung der Verunreinigung angesteuert. Weiter ist insbesondere vorgesehen, dass der von dem optischen Sensor erfasste Oberflächenbereich als nicht verunreinigt bewertet wird, wenn der bestimmte Flächenanteil bei dem Vergleich den vordefinierten Flächenanteil nicht überschreitet, insbesondere wenn der bestimmte Flächenanteil bei dem Vergleich den vordefinierten Flächenanteil unterschreitet.

Vorteilhafterweise wird in dem als Fügestelle festgelegten Oberflächenbereich des Karosseriebauteils das Bauelement aufgeklebt, wenn der als Fügestelle festgelegte Oberflächenbereich als nicht verunreinigt bewertet wird. Entsprechend wird vorteilhafterweise in dem als Fügestelle festgelegten Oberflächenbereich des Karosseriebauteils das Bauelement nicht aufgeklebt, wenn der als Fügestelle festgelegte Oberflächenbereich als verunreinigt bewertet wird. Insbesondere dann, wenn der gesamte als Fügestelle festgelegte Oberflächenbereich des Karosseriebauteils als nicht verunreinigt bewertet wird, wird vorteilhafterweise das anzubringende Bauelement stoffschlüssig in dem als Fügestelle festgelegten Oberflächenbereich mit dem Karosseriebauteil verbunden. Insbesondere wird als Bauelement ein Dichtungsprofil in dem als Fügestelle festgelegten Oberflächenbereich an dem Karosseriebauteil angeklebt. Des Weiteren ist insbesondere vorgesehen, dass ein Seitenschweller und/oder eine Typenbezeichnung als Bauelement stoffschlüssig in dem als Fügestelle festgelegten Oberflächenbereich mit dem Karosseriebauteil verbunden wird.

Die vorliegende Erfindung betrifft insofern insbesondere auch ein Verfahren zum Applizieren eines Bauelements, insbesondere eines Dichtungsprofils, auf einen festgelegten Oberflächenbereich einer Oberfläche eines Karosseriebauteils, wobei der festgelegte Oberflächenbereich von einem optischen Sensor erfasst wird und der von dem optischen Sensor erfasste Oberflächenbereich von einer Auswerteeinheit bezüglich eines Vorhandenseins einer Verunreinigung ausgewertet wird. Vorteilhafterweise wird dabei in dem als Fügestelle festgelegten Oberflächenbereich des Karosseriebauteils das Bauelement aufgeklebt, wenn der als Fügestelle festgelegte Oberflächenbereich als nicht verunreinigt bewertet wird. Wird der als Fügestelle festgelegte Oberflächenbereich hingegen als verunreinigt bewertet, wird vorteilhafterweise in dem als Fügestelle festgelegten Oberflächenbereich des Karosseriebauteils das Bauelement nicht aufgeklebt. Das Verfahren zum Prüfen der Oberfläche eines Karosseriebauteils ist insofern insbesondere Teil eines Verfahrens zum Applizieren eines Bauelements, insbesondere eines Dichtungsprofils, auf einen festgelegten Oberflächenbereich einer Oberfläche eines Karosseriebauteils, insbesondere Teil eines Verfahrens zum Aufkleben eines Dichtungsprofils auf einen festgelegten Oberflächenbereich einer Oberfläche eines Karosseriebauteils.

Gemäß einer weiteren vorteilhaften Ausgestaltung wird das Verfahren zur Prüfung einer Oberfläche eines Karosseriebauteils nach einem Reinigen des als Fügestelle festgelegten Oberflächenbereichs des Karosseriebauteils ausgeführt. Insbesondere ist vorgesehen, dass ein Oberflächenbereich der Oberfläche als Fügestelle für ein stoffschlüssiges Anbringen eines Bauelements festgelegt wird, der als Fügestelle festgelegte Oberflächenbereich gereinigt wird, der als Fügestelle festgelegte Oberflächenbereich von einem optischen Sensor erfasst wird und der von dem optischen Sensor erfasste Oberflächenbereich von einer Auswerteeinheit bezüglich eines Vorhandenseins einer Verunreinigung ausgewertet wird. In Abhängigkeit von dem Ergebnis der Auswertung erfolgt dann vorteilhafterweise das Applizieren des Bauelements oder nicht, insbesondere wie vorstehend bereits beschrieben. Mit dem Verfahren wird insofern vorteilhafterweise das Ergebnis einer Reinigung des als Fügestelle festgelegten Oberflächenbereichs geprüft. Somit kann vorteilhafterweise sichergestellt werden, dass ein Reinigungsvorgang erfolgreich war, und insbesondere keine Korrosionsschutzmittelrückstände, insbesondere keine Wachsrückstände, in dem als Fügestelle festgelegten Oberflächenbereich vorhanden sind. Insofern kann ein Bauelement vorteilhafterweise zuverlässig stoffschlüssig in dem als Fügestelle festgelegten Oberflächenbereich mit dem Karosseriebauteil verbunden werden, insbesondere ohne dass ein Risiko besteht, dass die Verbindung aufgrund von Korrosionsschutzmittelrückständen nicht hält. Da somit der Ausschuss verringert wird, werden hierdurch Kosten gespart.

Bei einer weiteren vorteilhaften Ausführungsform des Verfahrens wird das Verfahren zur Prüfung einer Oberfläche eines Karosseriebauteils vor einem Reinigen des als Fügestelle festgelegten Oberflächenbereichs ausgeführt, insbesondere unmittelbar vor dem Reinigen. Vorteilhafterweise wird das Reinigen des festgelegten Oberflächenbereichs dabei in Abhängigkeit von der Bewertung in Bezug auf das Vorliegen einer Verunreinigung gesteuert. Vorteilhafterweise ist die Auswerteeinheit ausgebildet, einen Grad der Verunreinigung festzustellen. Als Maßzahl für den Grad der Verunreinigung kann insbesondere der Flächenanteil einer Verunreinigung an dem von dem Sensor erfassten Oberflächenbereich vorgesehen werden. Je größer der bestimmte verunreinigte Flächenanteil ist, desto intensiver erfolgt vorteilhafterweise das Reinigen. Insbesondere ist vorgesehen, dass eine Steuereinheit zur Steuerung einer Reinigungsvorrichtung das Ergebnis der Auswerteeinheit in Bezug auf das Vorhandensein einer Verunreinigung empfängt und daraus ein Steuersignal für die Reinigungsvorrichtung erzeugt. Die Reinigungsvorrichtung wird vorteilhafterweise angesteuert, den als Fügestelle festgelegten Oberflächenbereich, für den das Vorhandensein einer Verunreinigung erkannt wurde, zu reinigen. Weiter ist insbesondere vorgesehen, dass ein Bereich, für den ein Reinigungsvorgang durchgeführt wurde, erneut von dem optischen Sensor erfasst wird, und der von dem optischen Sensor erfasste Oberflächenbereich von der Auswerteeinheit erneut bezüglich eines Vorhandenseins einer Verunreinigung ausgewertet wird. Sollte weiterhin auf das Vorhandensein einer Verunreinigung erkannt werden, so wird vorteilhafterweise der Reinigungsvorgang erneut durchgeführt und/oder ein Hinweis auf einen nicht erfolgreichen Reinigungsvorgang ausgegeben.

Weiter ist vorteilhafterweise eine Ausgestaltungsvariante vorgesehen, bei der der optische Sensor und/oder wenigstens ein weiterer optischer Sensor den als Fügestelle festgelegten Oberflächenbereich unmittelbar vor und unmittelbar nach dem Bereich erfasst, der von der Reinigungsvorrichtung gereinigt wird.

Eine weitere vorteilhafte Ausführungsform der Erfindung sieht vor, dass die Reinigungsvorrichtung einen Reinigungskontaktabschnitt aufweist, über den ein Reinigungsband zum Reinigen des als Fügestelle festgelegten Oberflächenbereichs geführt ist. Das Reinigungsband wird vorteilhafterweise während des Reinigens mit einer vorgegebenen Bandgeschwindigkeit über den Reinigungskontaktabschnitt geführt, insbesondere um einen sauberen Bandabschnitt nachzuführen und einen bereits verschmutzten Bandabschnitt abzuführen. Vorteilhafterweise wird die Bandgeschwindigkeit in Abhängigkeit von der Bewertung in Bezug auf das Vorliegen einer Verunreinigung für den zu reinigenden Oberflächenbereich gesteuert. Je größer der Grad der erkannten Verunreinigung des zu reinigenden Oberflächenbereichs, desto höher ist vorteilhafterweise die Bandgeschwindigkeit. Sollte keine Verunreinigung erkannt werden, kann die Bandgeschwindigkeit insbesondere auch "0" betragen. Der Reinigungskontaktabschnitt kann insbesondere durch eine Reinigungsrolle gebildet sein, über die das Reinigungsband geführt ist.

Vorteilhafterweise wird nach dem Reinigen und nachdem der als Fügestelle festgelegte Oberflächenbereich als verunreinigungsfrei bewertet wurde, das Bauelement stoffschlüssig in dem als Fügestelle festgelegten Oberflächenbereich mit dem Karosseriebauteil verbunden. Insbesondere wird ein Dichtungsprofil, insbesondere eine EPDM-Dichtung, als Bauelement in dem als Fügestelle festgelegten Oberflächenbereich an dem Karosseriebauteil angeklebt, insbesondere mittels einer entsprechend ausgebildeten Applikationsvorrichtung. Die Applikationsvorrichtung kann insbesondere, wie in der DE 10 2017 221 018 B3 beschrieben, ausgebildet sein, auf deren Inhalt bezüglich der Ausgestaltung der Applikationsvorrichtung hiermit vollumfänglich referenziert wird.

Ein besonders vorteilhaftes Verfahren sieht vor, dass ein Oberflächenbereich einer Oberfläche als Fügestelle für ein stoffschlüssiges Anbringen eines Bauelements festgelegt wird, der festgelegte Oberflächenbereich gereinigt wird, insbesondere mittels einer Reinigungsvorrichtung, vorzugsweise mittels einer erfindungsgemäß ausgebildeten Reinigungsvorrichtung, der gereinigte Oberflächenbereich von einem optischen Sensor erfasst wird, der von dem optischen Sensor erfasste Oberflächenbereich von einer Auswerteeinheit bezüglich eines Vorhandenseins einer Verunreinigung ausgewertet wird, in dem als Fügestelle festgelegten Oberflächenbereich des Karosseriebauteils das Bauelement aufgeklebt wird, wenn der als Fügestelle festgelegte Oberflächenbereich als nicht verunreinigt bewertet wird und das Bauelement in dem als Fügestelle festgelegten Oberflächenbereich des Karosseriebauteils nicht aufgeklebt wird, wenn der als Fügestelle festgelegte Oberflächenbereich als verunreinigt bewertet wird. Wenn der als Fügestelle festgelegte Oberflächenbereich als verunreinigt bewertet wird, wird der festgelegte Oberflächenbereich vorteilhafterweise erneut gereinigt, vorzugsweise mittels der erfindungsgemäß ausgebildeten Reinigungsvorrichtung, die vorteilhafterweise in Abhängigkeit von der Intensität der erkannten Verunreinigung gesteuert wird. Dann wird der festgelegte Oberflächenbereich vorteilhafterweise erneut von dem optischen Sensor erfasst, der von dem optischen Sensor erfasste Oberflächenbereich erneut von der Auswerteeinheit bezüglich eines Vorhandenseins einer Verunreinigung ausgewertet. Wenn der als Fügestelle festgelegte Oberflächenbereich als nicht verunreinigt bewertet wird, wird vorteilhafterweise das Bauelement in dem als Fügestelle festgelegten Oberflächenbereich des Karosseriebauteils aufgeklebt. Wenn der als Fügestelle festgelegte Oberflächenbereich hingegen weiterhin als verunreinigt bewertet wird, können insbesondere die vorstehend genannten Verfahrensschritte mit Reinigen und Überprüfen erneut durchgeführt werden, insbesondere wenn die Verunreinigung zumindest um einen vorgegebenen Wert reduziert werden konnte, oder der Applikationsvorgang für dieses Karosseriebauteil abgebrochen werden, insbesondere wenn keine signifikante Verbesserung des Reinigungsergebnisses erkannt wurde, also insbesondere wenn die Verunreinigung nicht um einen vorgegebenen Wert reduziert werden konnte. Die weiter obenstehend bereits genannten Verfahrensschritte können ebenfalls ganz oder teilweise von dem Verfahren umfasst sein.

Zur Lösung der anfangs genannten Aufgabe wird des Weiteren eine Reinigungsvorrichtung mit einem Reinigungskontaktabschnitt vorgeschlagen, die ausgebildet ist, einen Oberflächenbereich eines Karosseriebauteils eines Fahrzeugs mit dem Reinigungskontaktabschnitt zu reinigen, vorzugsweise zumindest teilweise automatisiert. Der Reinigungskontaktabschnitt ist dabei der Teil der Vorrichtung, der zur Reinigung des Oberflächenbereichs ausgebildet ist. Insbesondere ist vorgesehen, dass der Reinigungskontaktabschnitt das Karosseriebauteil zur Reinigung des Oberflächenbereichs kontaktiert. Die Reinigungsvorrichtung umfasst einen optischen Sensor und eine Auswerteeinheit und ist des Weiteren ausgebildet, ein erfindungsgemäßes Verfahren auszuführen. Insbesondere kann der Reinigungsvorrichtung für ein Karosseriebauteil ein Oberflächenbereich des Karosseriebauteils als Fügestelle für ein stoffschlüssiges Anbringen eines Bauelements an dem Karosseriebauteil vorgegeben werden. Dieser Oberflächenbereich wird vorteilhafterweise von dem optischen Sensor der Reinigungsvorrichtung erfasst und von der Auswerteeinheit bezüglich eines Vorhandenseins einer Verunreinigung ausgewertet. Insbesondere kann die Reinigungsvorrichtung darüber hinaus eine Steuereinheit umfassen, die das Ergebnis von der Auswerteeinheit empfängt, und den Reinigungskontaktabschnitt in Abhängigkeit von dem Ergebnis der Auswertung bezüglich eines Vorhandenseins einer Verunreinigung steuert. Der Reinigungskontaktabschnitt ist dabei vorteilhafterweise an einem Roboterarm angeordnet.

Die Reinigungsvorrichtung kann insbesondere Teil von einer Fertigungsstraße beziehungsweise von einem System für ein stoffschlüssiges Anbringen eines Bauelements auf einen Oberflächenbereich einer Oberfläche eines Karosseriebauteils sein, weiter insbesondere Teil von einer Fertigungsstraße beziehungsweise von einem System zum Applizieren eines Dichtungsprofils auf einen Oberflächenbereich einer Oberfläche eines Karosseriebauteils. Die Reinigungsvorrichtung ist dabei in der Fertigungsstraße beziehungsweise in dem System vorteilhafterweise einer Applikationsvorrichtung vorgelagert, sodass das Reinigen und Prüfen der Oberfläche vor dem Applizieren erfolgen kann.

Vorteilhafterweise umfasst die Reinigungsvorrichtung als optischen Sensor eine Kamera, insbesondere eine Smart-Kamera. Vorteilhafterweise umfasst die Smart-Kamera dabei die Auswerteeinheit. Hierdurch vereinfacht sich vorteilhafterweise der Aufbau der Reinigungsvorrichtung. Weiter vorteilhaft umfasst die Reinigungsvorrichtung eine UV-Licht-Quelle, insbesondere eine UV-Lampe, mit welcher der von dem optischen Sensor erfasste Oberflächenbereich ausgeleuchtet werden kann. Vorteilhafterweise lässt sich hierdurch das Erkennen einer Verunreinigung weiter verbessern.

Gemäß einer weiteren vorteilhaften Ausführungsform der Reinigungsvorrichtung ist der optische Sensor derart angeordnet, dass ein vor dem Reinigungskontaktabschnitt liegender Reinigungsbereich, also insbesondere ein Bereich, der noch mittels des Reinigungskontaktabschnitts zu reinigen ist, von dem optischen Sensor zur Bewertung einer notwendigen Reinigungsintensität erfasst wird. Vorteilhafterweise ist die Steuereinheit dabei ausgebildet, die Reinigung des Reinigungsbereichs in Abhängigkeit von dem Grad der erkannten Verunreinigung zu steuern. Sollte keine Verunreinigung erkannt werden, kann auch eine Reinigung des vor dem Reinigungskontaktabschnitt liegender Reinigungsbereich entfallen.

Weiter vorteilhaft ist der optische Sensor derart angeordnet, dass ein hinter dem Reinigungskontaktabschnitt liegender Reinigungsbereich, also insbesondere ein Bereich, der bereits mittels des Reinigungskontaktabschnitts gereinigt wurde, von dem optischen Sensor zur Kontrolle eines Ergebnisses einer erfolgten Reinigung erfasst wird. Vorteilhafterweise lässt sich hierdurch sicherstellen, dass ein Reinigungsvorgang tatsächlich erfolgreich verläuft. Falls trotz einer erfolgten Reinigung weiterhin auf ein Vorhandensein einer Verunreinigung erkannt wird, ist die Reinigungsvorrichtung vorteilhafterweise ausgebildet, eine Warnmeldung zu erzeugen.

Insbesondere ist es vorteilhaft, wenn der optische Sensor derart ausgerichtet ist, dass ein vor dem Reinigungskontaktabschnitt liegender Reinigungsbereich und ein hinter dem Reinigungskontaktabschnitt liegender Reinigungsbereich von dem optischen Sensor erfasst wird. Es kann aber auch alternativ mehr als ein optischer Sensor vorgesehen sein, wobei wenigstens ein erster optischer Sensor den vor dem Reinigungskontaktabschnitt liegenden Reinigungsbereich erfasst und wenigstens ein zweiter optischer Sensor den hinter dem Reinigungskontaktabschnitt liegenden Reinigungsbereich erfasst.

Gemäß einer weiteren vorteilhaften Ausgestaltung umfasst die Reinigungsvorrichtung des Weiteren ein Reinigungselement, insbesondere ein Reinigungsband, weiter insbesondere ein Reinigungsvliesband, und eine Antriebseinheit, wobei das Reinigungselement über den Reinigungskontaktabschnitt geführt ist. Der Reinigungskontaktabschnitt ist dabei vorteilhafterweise ausgebildet, einen zu reinigenden Oberflächenbereich für das Reinigen mit dem Reinigungselement zu kontaktieren. Des Weiteren ist die Antriebseinheit vorteilhafterweise ausgebildet, ein als Reinigungsband ausgebildetes Reinigungselement mit einer vorgebbaren Bandgeschwindigkeit über den Reinigungskontaktabschnitt zu bewegen, insbesondere um sauberes Reinigungsband nachzuführen und von dem Reinigungsvorgang verschmutztes Reinigungsband abzuführen.

Insbesondere ist vorgesehen, dass der Reinigungskontaktabschnitt durch eine Reinigungsrolle gebildet ist, wobei das Reinigungsband vorteilhafterweise ausgehend von einem Vorhaltungsreservoir und endend in einem Verbrauchsreservoir über die Reinigungsrolle geführt ist. Das Vorhaltungsreservoir ist dabei vorteilhafterweise durch eine Vorhaltungsrolle gebildet, auf der das Reinigungsband aufgewickelt ist, und von der das Reinigungsband entsprechend der vorgegebenen Bandgeschwindigkeit abgewickelt wird. Das Verbrauchsreservoir ist vorteilhafterweise durch eine Verbrauchsrolle gebildet, auf der das Reinigungsband entsprechend der vorgegebenen Bandgeschwindigkeit aufgewickelt wird.

Eine weitere vorteilhafte Ausführungsform sieht vor, dass die Reinigungsvorrichtung des Weiteren eine Applikationseinheit zum Applizieren eines Bauelements auf dem als Fügestelle festgelegten Oberflächenbereich des Karosseriebauteils umfasst. Insbesondere ist die Applikationseinheit ausgebildet, ein Dichtungsprofil, insbesondere eine EPDM-Dichtung (EPDM: Ethylen-Propylen-Dien; M-Gruppe), auf einem dem Verschließen einer Karosserieöffnung dienenden Karosseriebauteil aufzukleben. Die Applikationseinheit ist vorteilhafterweise nachrangig zu dem Reinigungskontaktabschnitt angeordnet. Ein Aufkleben eines Dichtungsprofils erfolgt vorteilhafterweise in einem als Fügestelle festgelegten Oberflächenbereich eines Karosseriebauteils und somit erst nachdem der als Fügestelle festgelegte Oberflächenbereich gereinigt wurde und vorteilhafterweise nachdem der als Fügestelle festgelegte Oberflächenbereich als frei von einer Verschmutzung bewertet wurde.

Insbesondere ist weiter vorgesehen, dass die Applikationseinheit einen Anrollkopf zum Aufbringen eines Dichtungsprofils und unter Vermittlung eines Klebemittels zum Verkleben des Dichtungsprofils mit einer Aufnahmefläche des Karosseriebauteils aufweist. Der Reinigungskontaktabschnitt ist dem Anrollkopf bezüglich der Aufnahmefläche des Karosseriebauteils vorteilhafterweise vorauspositioniert. Mit dem Reinigungsband umfasst die Reinigungsvorrichtung vorteilhafterweise ein mechanisches Reinigungselement, wobei die Reinigungsvorrichtung insbesondere ausgebildet ist, das Reinigungselement mit einer Umlaufbewegung unabhängig von der Applikationsbewegung des Anrollkopfes entlang der Aufnahmefläche zu beaufschlagen.

Gemäß einer weiteren vorteilhaften Ausgestaltung ist der Reinigungskontaktabschnitt feststehend, wobei ein zu reinigendes Karosseriebauteil in die Reinigungsvorrichtung eingesetzt und zum Reinigen des festgelegten Oberflächenbereichs an dem Reinigungskontaktabschnitt vorbeigeführt werden kann. Der Anrollkopf der Applikationseinheit ist in dem Fall vorteilhafterweise ebenfalls feststehend ausgebildet.

Dagegen ist gemäß einer vorteilhaften Ausgestaltungsvariante vorgesehen, dass der Reinigungskontaktabschnitt an einem Roboterarm angeordnet ist, wobei der Reinigungskontaktabschnitt mit dem Roboterarm zum Reinigen des festgelegten Oberflächenbereichs vorteilhafterweise an dem Karosseriebauteil vorbeigeführt werden kann. Der Anrollkopf der Applikationseinheit ist in dem Fall vorteilhafterweise ebenfalls an einem Roboterarm angeordnet, wobei der Anrollkopf mit dem Roboterarm vorteilhafterweise zum Applizieren des Dichtungsprofils an dem festgelegten Oberflächenbereich des Karosseriebauteils vorbeigeführt werden kann.

Die Smart-Kamera umfasst einen optischen Sensor, eine Recheneinheit und eine Auswerteeinheit. Die Recheneinheit ist insbesondere eine Mikrocontrollerschaltung, die entsprechend programmiert ist. Die Recheneinheit der Smart-Kamera ist ausgebildet, den optischen Sensor und die Auswerteeinheit anzusteuern. Insbesondere ist die Recheneinheit ausgebildet, den optischen Sensor zur Aufnahme von Bildinformation anzusteuern und zur Übertragung der aufgenommenen Bildinformation an die Auswerteeinheit. Insbesondere ist die Recheneinheit ausgebildet, Daten zwischen der Recheneinheit und dem optischen Sensor und der Auswerteeinheit zu übertragen, insbesondere Steuerbefehle an den optischen Sensor zu senden, Bildinformationen von dem optischen Sensor zu empfangen, Bildinformationen an die Auswerteeinheit zu senden und Ergebnisse der Auswerteeinheit zu empfangen. Die Recheneinheit umfasst dabei Anweisungen, insbesondere Programmbefehle, die vorteilhafterweise bewirken, dass die Smart-Kamera ein erfindungsgemäßes Verfahren ausführt, insbesondere ein Verfahren, wie obenstehend beschrieben, wobei die Merkmale einzeln oder in Kombination realisiert sein können.

Insbesondere ist die Recheneinheit ausgebildet zu bewirken, dass die Smart-Kamera ein Verfahren zur Prüfung einer Oberfläche eines Karosseriebauteils eines Fahrzeugs auf das Vorhandensein einer Verunreinigung ausführt, wobei die Recheneinheit den optischen Sensor der Smart-Kamera derart ansteuert, dass ein festgelegter Oberflächenbereich des Karosseriebauteils von dem optischen Sensor erfasst wird. Weiter steuert die Recheneinheit den optischen Sensor derart, dass der bildtechnisch erfasste Oberflächenbereich als Bildinformation an die Auswerteeinheit der Smart-Kamera übertragen wird. Weiter steuert die Recheneinheit die Auswerteeinheit derart, dass der von dem optischen Sensor erfasste Oberflächenbereich von der Auswerteeinheit bezüglich eines Vorhandenseins einer Verunreinigung ausgewertet wird, insbesondere dass der von dem optischen Sensor erfasste Oberflächenbereich bezüglich eines Vorhandenseins von Korrosionsschutzmittelrückständen als Verunreinigung von der Auswerteeinheit ausgewertet wird.

Vorteilhafterweise umfasst die Smart-Kamera ferner einen UV-Licht-Quelle, wobei die Recheneinheit weiter ausgebildet ist, die UV-Licht-Quelle derart anzusteuern, dass der von dem optischen Sensor erfasste Oberflächenbereich mit UV-Licht bestrahlt wird.

Weiter vorteilhaft ist die Recheneinheit ausgebildet, die Auswerteeinheit derart zu steuern, dass bei der Auswertung ein Flächenanteil einer Verunreinigung an dem von dem optischen Sensor erfassten Oberflächenbereich bestimmt wird und der bestimmte Flächenanteil einem Vergleich mit einem vordefinierten Flächenanteil unterzogen wird.

Weiter vorteilhaft ist die Recheneinheit ausgebildet, die Auswerteeinheit derart zu steuern, dass bei einem Überschreiten des vordefinierten Flächenanteils der von dem optischen Sensor erfasste Oberflächenbereich als verunreinigt bewertet wird.

Weiter vorteilhaft ist die Recheneinheit ausgebildet, die Auswerteeinheit derart zu steuern, dass bei einem Unterschreiten des vordefinierten Flächenanteils der von dem optischen Sensor erfasste Oberflächenbereich als nicht verunreinigt bewertet wird.

Weiter vorteilhaft ist die Recheneinheit der Smart-Kamera ausgebildet, eine Reinigungsvorrichtung derart anzusteuern, dass ein als Fügestelle festgelegter Oberflächenbereich des Karosseriebauteils, für den das Vorhandensein einer Verunreinigung erkannt wurde, gereinigt wird.

Weitere vorteilhafte Einzelheiten, Merkmale und Ausgestaltungsdetails der Erfindung werden im Zusammenhang mit den in den Figuren (Fig.: Figur) dargestellten Ausführungsbeispielen näher erläutert. Dabei zeigt:
- Fig. 1: ein Ausführungsbeispiel für eine Durchführung eines erfindungsgemäß ausgebildeten Verfahrens mittels einer erfindungsgemäß ausgebildeten Reinigungsvorrichtung;
- Fig. 2: ein weiteres Ausführungsbeispiel für eine Durchführung eines erfindungsgemäß ausgebildeten Verfahrens mittels einer erfindungsgemäß ausgebildeten Reinigungsvorrichtung;
- Fig. 3: ein Ausführungsbeispiel für eine erfindungsgemäß ausgebildete Reinigungsvorrichtung in einer perspektivischen Darstellung, wobei die Reinigungsvorrichtung ausschnittsweise dargestellt ist;
- Fig. 4: ein weiteres Ausführungsbeispiel für eine erfindungsgemäß ausgebildete Reinigungsvorrichtung;
- Fig. 5: ein weiteres Ausführungsbeispiel für eine erfindungsgemäß ausgebildete Reinigungsvorrichtung mit einer Applikationsvorrichtung; und
- Fig. 6: ein weiteres Ausführungsbeispiel für eine erfindungsgemäß ausgebildete Reinigungsvorrichtung in einer perspektivischen Darstellung, wobei die Reinigungsvorrichtung ausschnittsweise dargestellt ist.

In den verschiedenen Figuren sind gleiche Teile in der Regel mit den gleichen Bezugszeichen versehen und werden daher mitunter auch jeweils nur im Zusammenhang mit einer der Figuren erläutert.

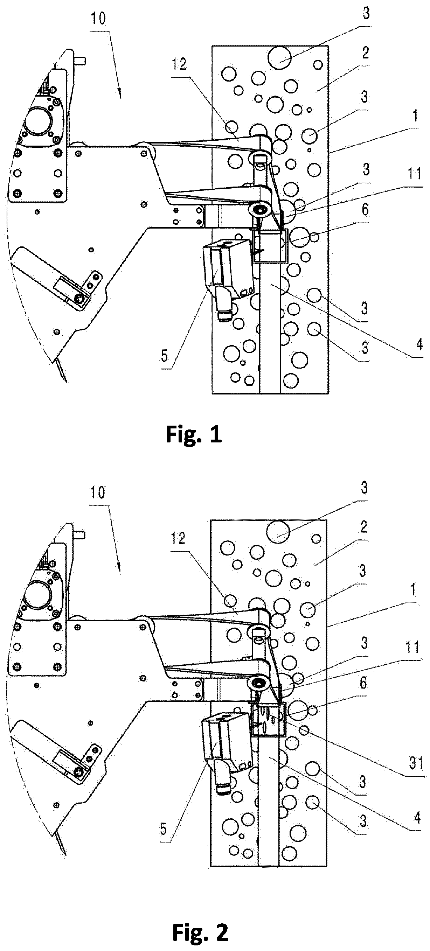

Unter Bezugnahme auf Fig. 1 und Fig. 2 wird nachfolgend ein Ausführungsbeispiel für ein Verfahren zur Prüfung einer Oberfläche 2 eines Karosseriebauteils 1 eines Fahrzeugs auf das Vorhandensein einer Verunreinigung 3, 31 erläutert. Von dem Karosseriebauteil 1 ist dabei nur ein Ausschnitt dargestellt. Auch von einer Reinigungsvorrichtung 10 ist in Fig. 1 und Fig. 2 jeweils nur ein Ausschnitt dargestellt. Die auf dem Karosseriebauteil 1 dargestellten Kreise symbolisieren Verunreinigungen 3. Auf dem Karosseriebauteil 1 soll dabei in diesem Ausführungsbeispiel ein Dichtungsprofil aufgeklebt werden. Insbesondere kann auch vorgesehen sein, andere Bauelemente, beispielsweise eine Typ-Bezeichnung oder ein Markenemblem, auf das Karosseriebauteil 1 aufzukleben.

Das Verfahren sieht nun vor, dass zunächst ein Oberflächenbereich 4 der Oberfläche 2 des Karosseriebauteils 1 als Fügestelle für das spätere Aufkleben des Dichtungsprofils festgelegt wird. Diese Festlegung kann beispielsweise durch die Art und Weise der Anordnung des Karosseriebauteils 1 relativ zu der Reinigungsvorrichtung 10 erfolgen. Ist die Reinigungsvorrichtung 10 und/oder die Applikationsvorrichtung, mit der das Dichtungsprofil später auf das Karosseriebauteil 1 aufgeklebt wird, zum Reinigen beziehungsweise zum Applizieren mit einem Roboterarm ausgerüstet, ist insbesondere auch vorgesehen, dass das Festlegen des Oberflächenbereichs 4 der Oberfläche 2 des Karosseriebauteils 1 als Fügestelle für das spätere Aufkleben des Dichtungsprofils durch eine entsprechende Programmierung des Roboterarms erfolgt, wobei insbesondere Referenzpunkte auf dem Karosseriebauteil 1 für das korrekte Festlegen des Oberflächenbereichs 4 vorgesehen sein können (in Fig. 1 und Fig. 2 nicht dargestellt).

In diesem Ausführungsbeispiel ist vorgesehen, dass die Reinigungsvorrichtung 10 mit einem Reinigungskontaktabschnitt 11 an dem Karosseriebauteil 1 entlang gefahren wird, um den als Fügestelle festgelegten Oberflächenbereich 4 zu reinigen. Über den Reinigungskontaktabschnitt 11 ist dabei ein Reinigungsband 12, das in diesem Ausführungsbeispiel als Reinigungsvlies ausgebildet ist, geführt, wobei die Oberfläche 2 des Karosseriebauteils 1 mit dem Reinigungskontaktabschnitt 11 und dem darüber geführten Reinigungsband 12 mechanisch gereinigt wird.

Der festgelegte Oberflächenbereich 4 wird von einem optischen Sensor 5, der in diesem Ausführungsbeispiel als Smart-Kamera ausgebildet ist, sukzessive erfasst. Der optische Sensor 5 ist derart ausgerichtet ist, dass von dem optischen Sensor 5 ein Bereich 6 unmittelbar hinter dem Reinigungskontaktabschnitt 11 erfasst wird. Dieser von dem optischen Sensor 5 erfasste Oberflächenbereich 6 wird von einer Auswerteeinheit bezüglich eines Vorhandenseins einer Verunreinigung ausgewertet. Die Auswerteeinheit ist dabei in diesem Ausführungsbeispiel von dem optischen Sensor 5 umfasst. Die Auswerteeinheit umfasst eine Mikrocontrollerschaltung, von der die Auswertung der mit dem optischen Sensor 5 erfassten Bildinformation durchgeführt wird. Die Auswerteeinheit weist eine Mustererkennung auf, die trainiert ist, das Vorhandensein einer Verunreinigung zu erkennen, insbesondere das Vorhandensein einer potentiell kritischen Verunreinigung zu erkennen, die ein zuverlässiges Aufkleben eines Dichtungsprofils verhindern würde.

Bei diesem Ausführungsbeispiel wird zudem bei der Auswertung der von dem als Smart-Kamera ausgebildeten optischen Sensor 5 erfassten Bildinformation ein Flächenanteil bestimmt, den eine Verunreinigung an dem von dem optischen Sensor 5 erfassten Oberflächenbereich 6 einnimmt. Den so bestimmten Wert für einen verunreinigten Flächenanteil vergleicht die Auswerteeinheit dabei mit vorgegebenen Referenzwerten, um einen Grad der vorliegenden Verunreinigung zu bestimmen. Dazu sind entsprechende Werte in einer Lookup-Tabelle einander zugeordnet. Der Wert für den Flächenanteil ist dabei maximal "1", nämlich dann, wenn der als verunreinigt bewertetet Flächenanteil mit dem von dem optischen Sensor 5 erfassten Oberflächenbereich 6 übereinstimmt. Weiter ist der Wert minimal "0", nämlich dann, wenn der von dem optischen Sensor 5 erfasste Oberflächenbereich 6 als vollständig frei von Verunreinigungen bewertet wird. Weiter ist ein minimaler Referenzwert für den Vergleich festgelegt, wobei bei einem Unterschreiten dieses minimalen Referenzwerts der erfasste Oberflächenbereich 6 als verunreinigungsfrei bewertet wird. Der minimale Referenzwert kann dabei größer "0" sein, insbesondere zwischen "0" und "0,1", vorzugsweise zwischen "0" und 0,05".

Bei dem in Fig. 1 dargestellten Fall ist nun beispielhaft vorgesehen, dass in dem von dem optischen Sensor 5 erfassten Oberflächenbereich 6 keine Verunreinigungen erkannt wurden. Der Wert für den bestimmten Flächenanteil beträgt somit "0" und liegt damit unterhalb des vordefinierten minimalen Referenzwertes. Der von dem optischen Sensor 5 erfasste Oberflächenbereich 6 wird daher als nicht verunreinigt bewertet. Das Reinigen wird unverändert fortgesetzt.

Bei dem in Fig. 2 dargestellten Fall ist dagegen beispielhaft vorgesehen, dass in dem von dem optischen Sensor 5 erfassten Oberflächenbereich 6 eine Verunreinigung 31 erkannt wurde. Die Auswerteeinheit ist in diesem Ausführungsbeispiel ausgebildet, den von der Smart-Kamera 5 erfassten Oberflächenbereich 6 bezüglich eines Typs einer Verunreinigung auszuwerten. Mittels der Mustererkennung der Auswerteeinheit wird in diesem Ausführungsbeispiel die Verunreinigung 31 als Wachsrückstand von einem auf das Karosseriebauteil 1 aufgebrachten Korrosionsschutz erkannt. Der Wert für den bestimmten Flächenanteil liegt zudem oberhalb des vordefinierten minimalen Referenzwertes, sodass auf eine relevante Verunreinigung erkannt wird. Für eine verbesserte Erkennung des Vorliegens einer Verunreinigung und eine verbesserte Erkennung des Typs einer vorliegenden Verunreinigung ist insbesondere vorgesehen, den von dem optischen Sensor 5 erfassten Oberflächenbereich 6 mit UV-Licht zu bestrahlen (in Fig. 1 und Fig. 2 nicht explizit dargestellt).

Wird das Vorliegen einer Verunreinigung erkannt, wird vorteilhafterweise ein Hinweis für ein Bedienpersonal erzeugt. In diesem Ausführungsbeispiel ist zudem vorgesehen, dass die Reinigungsvorrichtung 10 angesteuert wird, den als Fügestelle festgelegten Oberflächenbereich 4, für den das Vorhandensein einer Verunreinigung 31 erkannt wurde, erneut zu reinigen. Die Intensität der Reinigung wird dabei vorteilhafterweise in Abhängigkeit von dem ermittelten Grad der vorliegenden Verunreinigung 31 gesteuert. Das Ergebnis der erneuten Reinigung wird erneut von dem optischen Sensor 5 geprüft. Sollte trotzt wiederholter Reinigung weiterhin auf eine Verunreinigung erkannt werden, wird eine Fehlermeldung erzeugt und der Reinigungsvorgang unterbrochen.

In Bezug auf die Steuerung der Reinigungsvorrichtung 10 ist zudem vorgesehen, dass die Bandgeschwindigkeit des über den Reinigungskontaktabschnitt 11 der Reinigungsvorrichtung 10 geführten Reinigungsbandes 12 in Abhängigkeit von der Bewertung in Bezug auf das Vorliegen einer Verunreinigung 31 für den zu reinigenden Oberflächenbereich gesteuert wird. Insbesondere dann, wenn eine Verunreinigung 31 erkannt wurde, ist dabei vorgesehen, die Bandgeschwindigkeit kurzfristig so zu erhöhen, dass bei der erneuten Reinigung die Reinigung mit einem sauberen Reinigungsbandabschnitt erfolgt, sodass verhindert wird, dass von dem Reinigungsband 12 aufgenommene Verunreinigungen auf die zu reinigende Oberfläche aufgetragen werden.

Ist der als Fügestelle festgelegte Oberflächenbereich 4 des Karosseriebauteils 1 vollständig gereinigt, ohne dass nach Abschluss des Reinigens noch Verunreinigungen 3, 31 in dem als Fügestelle festgelegte Oberflächenbereich 4 erkannt werden, wird ein Dichtungsprofil als Bauelement in dem als Fügestelle festgelegten Oberflächenbereich 4 auf das Karosseriebauteil aufgeklebt.

Insbesondere kann vorgesehen, sein, dass die Smart-Kamera ferner eine hinterlegte Anweisungen umfassende Recheneinheit aufweist, wobei die Smart-Kamera unter Nutzung der Recheneinheit ausgebildet ist, das vorstehende beschriebene Verfahren zumindest teilweise auszuführen.

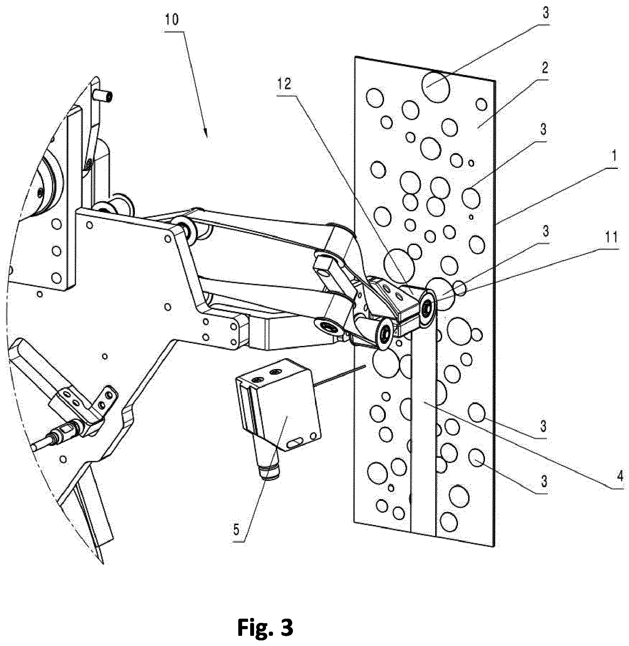

In Fig. 3 ist eine für das unter Bezugnahme auf Fig. 1 und Fig. 2 beschriebene Verfahren nutzbare Reinigungsvorrichtung 10 näher dargestellt. Die Reinigungsvorrichtung 10 umfasst in dem Ausführungsbeispiel einen durch eine Reinigungsrolle gebildeten Reinigungskontaktabschnitt 11. Weiter umfasst die Reinigungsvorrichtung 10 ein über eine Rollenanordnung geführtes Reinigungsband 12, wobei das Reinigungsband 12 für einen Kontakt mit dem Karosseriebauteil 1 über den von der Reinigungsrolle gebildeten Reinigungskontaktabschnitt 11 geführt ist. Der Reinigungskontaktabschnitt 11 ist dabei ausgebildet, einen zu reinigenden Oberflächenbereich eines Karosseriebauteils 1 für das Reinigen mit dem Reinigungsband 12 zu kontaktieren. Das Reinigungsband 12 wird dabei von einer in Fig. 3 nicht dargestellten Antriebseinheit mit einer vorgebbaren Bandgeschwindigkeit über den Reinigungskontaktabschnitt 11 bewegt. Die Bandgeschwindigkeit wird dabei vorteilhafterweise in Abhängigkeit von dem Grad der Verunreinigung des zur reinigenden Oberflächenbereichs 4 des Karosseriebauteils 1 angepasst. Der Grad der Verunreinigung wird dabei mittels eines optischen Sensors 5, der an der Reinigungsvorrichtung 10 angeordnet ist (in Fig. 3 nicht explizit dargestellt), ermittelt. Der optische Sensor 5 umfasst dabei eine Auswerteeinheit. Die Ermittlung des Grades der Verunreinigung erfolgt insbesondere wie unter Bezugnahme auf Fig. 1 und Fig. 2 erläutert. Der optische Sensor 5 ist dabei derart angeordnet, dass ein hinter dem Reinigungskontaktabschnitt 11 liegender Reinigungsbereich von der Smart-Kamera 5 zur Kontrolle eines Ergebnisses einer erfolgten Reinigung erfasst wird.

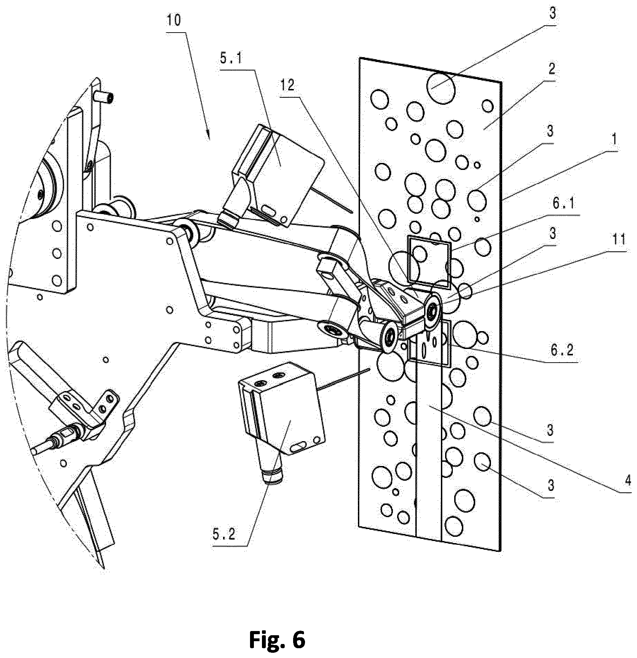

In Fig. 6 ist eine ähnliche Reinigungsvorrichtung 10, wie in Fig. 3, dargestellt. Die in Fig. 6 dargestellte Reinigungsvorrichtung 10 umfasst allerdings einen ersten optischen Sensor 5.1 und einen zweiten optischen Sensor 5.2. Mit dem ersten optischen Sensor 5.1 wird dabei ein erster Oberflächenbereich 6.1 erfasst, der vor dem Reinigungskontaktabschnitt 11 liegt. Mit dem zweiten optischen Sensor 5.2 wird ein zweiter Oberflächenbereich 6.2 erfasst, der hinter dem Reinigungskontaktabschnitt 11 liegt. Der erste optische Sensor 5.1 erfasst dabei Verunreinigungen 3 in dem von dem ersten optischen Sensor 5.1 erfassten ersten Oberflächenbereich 6.1. Eine Auswerteeinheit bewertet den Grad der von dem ersten optischen Sensor 5.1 in dem ersten Oberflächenbereich 6.1 erfassten Verunreinigung 3 und überträgt das Ergebnis der Bewertung an eine in Fig. 6 nicht explizit dargestellte Steuereinheit, die die Reinigungsvorrichtung 10 in Abhängigkeit von dem bewerteten Grad der Verunreinigung steuert. Insbesondere ist vorgesehen, dass die Steuereinheit ausgebildet ist, die Reinigungsvorrichtung 10 derart zu steuern, dass der Reinigungskontaktabschnitt 11 langsamer über den als Fügestelle festgelegter Oberflächenbereich 4 bewegt wird, wenn ein hoher Verunreinigungsgrad erkannt wurde. Auch kann bei einem hohen Verunreinigungsgrad die Bandgeschwindigkeit für das über den Reinigungskontaktabschnitt 11 geführte Reinigungsband 12 erhöht werden. Auch kann eine Reinigungsmittelmenge in Abhängigkeit von einem erkannten Verunreinigungsgrad zugeführt werden.

Mit dem zweiten optischen Sensor 5.2 wird das Ergebnis der Reinigung direkt kontrolliert. Werden keine zurückgebliebenen Verunreinigungen 31 in dem von dem zweiten Sensor 5.2 erfassten Oberflächenbereich 6.2 erkannt, so wird der Reinigungsvorgang normal fortgesetzt. Wird von dem zweiten Sensor 5.2 hingegen eine Verunreinigung 31 in dem erfassten Oberflächenbereich 6.2 detektiert beziehungsweise ergibt die Auswertung des von dem zweiten optischen Sensor 5.2 für den zweiten Oberflächenbereich 6.2 erfassten Bildinformation, dass eine Verunreinigung 31 vorliegt, so kann insbesondere wie bereits unter Bezugnahme auf Fig. 3 erläutert verfahren werden. Das heißt, die Reinigungsvorrichtung 10 kann insbesondere angesteuert werden, den Oberflächenbereich 6.2 mit der erfassten Verunreinigung 31 erneut zu reinigen und/oder es kann eine Fehlermeldung ausgegeben werden, insbesondere bevor ein Dichtungsprofil an der nicht erfolgreich gereinigten Stelle appliziert wird.

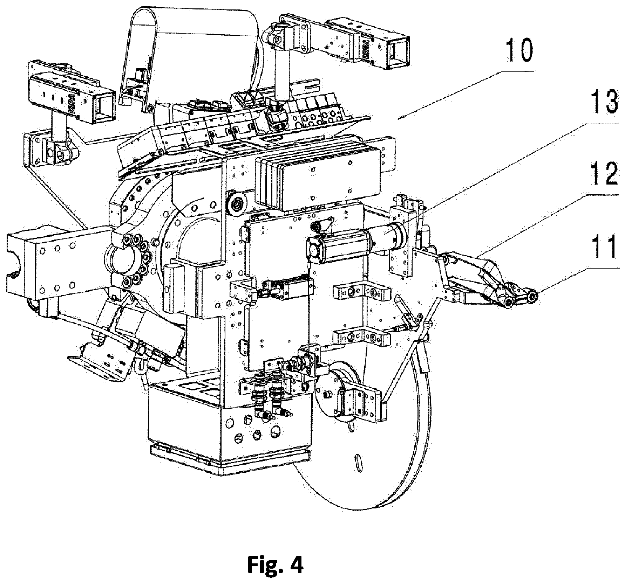

Fig. 4 zeigt weitere Details einer möglichen Ausgestaltung einer Reinigungsvorrichtung 10. So ist in Fig. 4 auch eine Antriebseinheit 13, mit der ein Reinigungsband 12 mit einer vorgebbaren Bandgeschwindigkeit über einen Reinigungskontaktabschnitt 11 bewegt werde kann, dargestellt. Darüber hinaus ist in Fig. 4 unten rechts eine Bevorratungsrolle dargestellt, welche das Reinigungsband 12 vorhält, und von welcher das Reinigungsband 12 sukzessive entnommen wird.

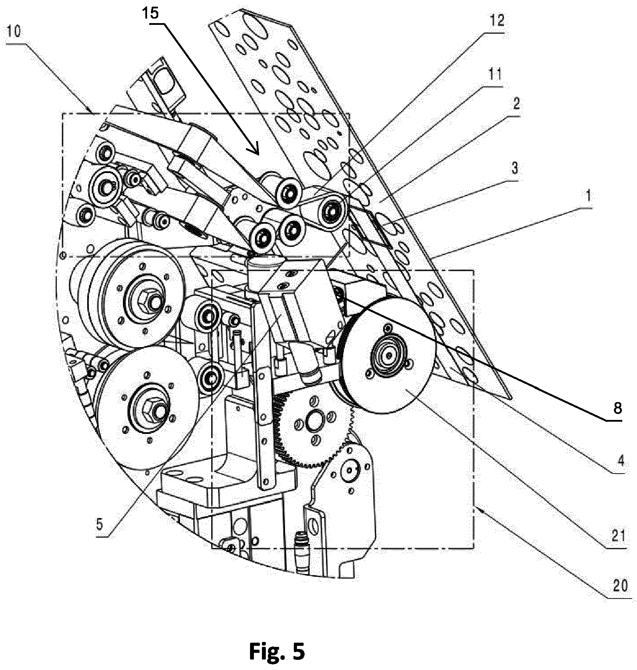

Fig. 5 zeigt zudem ein Ausführungsbeispiel bei dem eine Reinigungsvorrichtung 10 eine Applikationseinheit 20 zum Applizieren eines Dichtungsprofils 8 auf einem dem Verschließen einer Karosserieöffnung dienenden Karosseriebauteil 1 umfasst. Die Applikationseinheit 20 ist dabei nachrangig zu einem Reinigungskontaktabschnitt 11, der von einer Reinigungsrolle 14 bereitgestellt wird, angeordnet. Die Reinigungsvorrichtung 10, die die Applikationseinheit 20 umfasst, kann auch als Applikationseinheit 20, die die Reinigungsvorrichtung 10 umfasst, angesehen werden.

Bei dem in Fig. 5 gezeigten Ausführungsbeispiel ist die Reinigungsvorrichtung 10 ausgebildet, einen als Fügestelle festgelegten Oberflächenbereich 4 eines Karosseriebauteils 1 zu reinigen. Die Reinigung der Fügestelle erfolgt im Wesentlichen unmittelbar bevor das Dichtungsprofil 8 auf den als Fügestelle festgelegten Oberflächenbereich 4 über einen Anrollkopf der Applikationseinheit 20 aufgebracht und verklebt wird. Der Reinigungskontaktabschnitt 11 ist hierfür gegenüber dem Anrollkopf vorauspositioniert. Der Reinigungskontaktabschnitt 11 ist bezüglich des Fügebereichs der Applikationseinheit 20 vorlaufend angeordnet. Während des Applikationsvorgangs des Dichtungsprofils 8 ist daher ein bestimmter Abschnitt des als Fügestelle festgelegten Oberflächenbereichs 4 zunächst mit dem Reinigungskontaktabschnitt 11 in einem reinigenden Kontakt, dann wird der gereinigte, als Fügestelle festgelegte Oberflächenbereich 4 von einem optischen Sensor 5 erfasst und es erfolgt on-the-fly eine Bewertung hinsichtlich des Vorliegens einer Verunreinigung in dem von dem optischen Sensor 5 erfassten Oberflächenbereich. Nur dann, wenn der von dem optischen Sensor 5 erfasste Oberflächenbereich als verunreinigungsfrei bewertet wird, wird zeitlich nachfolgend das Dichtungsprofil 8 auf den als Fügestelle festgelegten Oberflächenbereich 4 aufgeklebt.

Die Reinigungsvorrichtung 10 umfasst in der in Fig. 5 dargestellten Ausgestaltung eine Rollenanordnung 15 mit mehreren Umlenkrollen und einer Antriebsrolle, wobei über die Umlenkrollen und die Antriebsrolle ein bandförmiges Reinigungsvlies als Reinigungsband 12 gespannt ist und fortlaufend gefördert wird. Hierbei kann das Reinigungsband 12 entweder als umlaufendes Endlosband oder als offenes Band für eine Anfang-bis-Ende Förderung ausgeführt sein. Eine der Umlenkrollen ist als Reinigungsrolle 14 ausgeführt, die in einem Reinigungskontaktabschnitt 11 das Reinigungsband 12 gegen den beziehungsweise an den als Fügestelle festgelegten Oberflächenbereich 4 drückt.

Die Applikationseinheit 20 umfasst in dem gezeigten Ausführungsbeispiel des Weiteren eine Andrückrolle 21, über die das Dichtungsprofil 8 beim Aufbringen auf den als Fügestelle festgelegten Oberflächenbereich 4 gegen den als Fügestelle festgelegten Oberflächenbereich 4 beaufschlagt wird, um das Dichtungsprofil 8 mit dem als Fügestelle festgelegten Oberflächenbereich 4 zu verkleben. Die Andrückrolle 21 ist über eine Drehachse drehbar gelagert. Für eine gute Verklebung des Dichtungsprofils 8 mit dem als Fügestelle festgelegten Oberflächenbereich 4 ist die Drehachse während des Applikationsvorgangs zumindest weitestgehend parallel zu dem Querverlauf des als Fügestelle festgelegten Oberflächenbereichs 4 ausgerichtet. Um eine möglichst gleichbleibende optimale Ausrichtung der Andrückrolle 21 gegen den als Fügestelle festgelegten Oberflächenbereich 4 über dessen gesamten Verlauf zu gewährleisten, findet eine fortlaufende Korrektur durch Verschwenken des Karosseriebauteils 1 um die Schwenkachse statt. Bezüglich des Applizierens des Dichtungsprofils 8 auf dem Karosseriebauteil 1 wird darüber hinaus auf die Druckschrift DE 10 2017 221 018 B3 verwiesen, insbesondere auf das im Zusammenhang mit Fig. 2 der DE 10 2017 221 018 B3 beschriebene Ausführungsbeispiel.

Die in den Figuren dargestellten und im Zusammenhang mit diesen erläuterten

Ausführungsbeispiele dienen der Erläuterung der Erfindung, deren Schutzgegenstand ausschließlich durch die beigefügten Patentansprüche definiert wird.

### Bezugszeichenliste

- 1: Karosseriebauteil
- 2: Oberfläche des Karosseriebauteils
- 3, 31: Verunreinigung
- 4: als Fügestelle festgelegter Oberflächenbereich
- 5: optischer Sensor
- 5.1: erster optischer Sensor
- 5.2: zweiter optischer Sensor
- 6: von dem optischen Sensor erfasster Oberflächenbereich
- 6.1: von dem ersten optischen Sensor erfasster erster Oberflächenbereich
- 6.2: von dem zweiten optischen Sensor erfasster zweiter Oberflächenbereich
- 8: Dichtungsprofil
- 10: Reinigungsvorrichtung
- 11: Reinigungskontaktabschnitt
- 12: Reinigungsband
- 13: Antriebseinheit
- 14: Reinigungsrolle
- 15: Rollenanordnung
- 20: Applikationseinheit
- 21: Andrückrolle

## Patentansprüche

1. Verfahren zur Prüfung einer Oberfläche (2) eines Karosseriebauteils (1) eines Fahrzeugs auf das Vorhandensein einer Verunreinigung (3), wobei ein Oberflächenbereich (4) der Oberfläche (2) als Fügestelle für ein stoffschlüssiges Anbringen eines Bauelements (8) festgelegt wird, der festgelegte Oberflächenbereich (4) von einem optischen Sensor (5) erfasst wird und der von dem optischen Sensor erfasste Oberflächenbereich (6) von einer Auswerteeinheit bezüglich eines Vorhandenseins einer Verunreinigung (31) ausgewertet wird.

2. Verfahren nach Anspruch 1, **dadurch gekennzeichnet, dass** bei der Auswertung ein Flächenanteil einer Verunreinigung (31) an dem von dem optischen Sensor (5) erfassten Oberflächenbereich (6) bestimmt wird und der bestimmte Flächenanteil einem Vergleich mit einem vordefinierten Flächenanteil unterzogen wird.

3. Verfahren nach Anspruch 2, **dadurch gekennzeichnet, dass** bei einem Überschreiten des vordefinierten Flächenanteils der von dem optischen Sensor (5) erfasste Oberflächenbereich (6) als verunreinigt bewertet wird; und/oder dass bei einem Unterschreiten des vordefinierten Flächenanteils der von dem optischen Sensor (5) erfasste Oberflächenbereich (6) als nicht verunreinigt bewertet wird.

4. Verfahren nach einem der vorstehenden Ansprüche, **dadurch gekennzeichnet, dass** in dem als Fügestelle festgelegten Oberflächenbereich (4) des Karosseriebauteils (1) das Bauelement (8) aufgeklebt wird, wenn der als Fügestelle festgelegte Oberflächenbereich (4) als nicht verunreinigt bewertet wird.

5. Verfahren nach einem der vorstehenden Ansprüche, **dadurch gekennzeichnet, dass** in dem als Fügestelle festgelegten Oberflächenbereich (4) des Karosseriebauteils (1) das Bauelement (8) nicht aufgeklebt wird, wenn der als Fügestelle festgelegte Oberflächenbereich (4) als verunreinigt bewertet wird.

6. Verfahren nach einem der vorstehenden Ansprüche, **dadurch gekennzeichnet, dass** das Verfahren nach einem Reinigen des als Fügestelle festgelegten Oberflächenbereichs (4) des Karosseriebauteils (1) ausgeführt wird.

7. Verfahren nach einem der vorstehenden Ansprüche, **dadurch gekennzeichnet, dass** das Verfahren vor einem Reinigen des als Fügestelle festgelegten Oberflächenbereichs (4) ausgeführt wird, wobei das Reinigen des als Fügestelle festgelegten Oberflächenbereichs (4) in Abhängigkeit von der Bewertung in Bezug auf das Vorliegen einer Verunreinigung (31) gesteuert wird.

8. Verfahren nach Anspruch 6 oder Anspruch 7, **dadurch gekennzeichnet, dass** eine Reinigungsvorrichtung (10) angesteuert wird, den als Fügestelle festgelegten Oberflächenbereich (4), für den das Vorhandensein einer Verunreinigung (31) erkannt wurde, zu reinigen.

9. Verfahren nach Anspruch 8, **dadurch gekennzeichnet, dass** die Reinigungsvorrichtung (10) einen Reinigungskontaktabschnitt (11) aufweist, über den ein Reinigungsband (12) zum Reinigen des als Fügestelle festgelegten Oberflächenbereichs (4) geführt ist, wobei das Reinigungsband (12) während des Reinigens mit einer vorgegebenen Bandgeschwindigkeit über den Reinigungskontaktabschnitt (11) geführt wird, wobei die Bandgeschwindigkeit in Abhängigkeit von der Bewertung in Bezug auf das Vorliegen einer Verunreinigung (31) für den zu reinigenden Oberflächenbereich gesteuert wird.

10. Reinigungsvorrichtung (10) mit einem Reinigungskontaktabschnitt (11), wobei die Reinigungsvorrichtung (10) ausgebildet ist, einen Oberflächenbereich eines Karosseriebauteils (1) eines Fahrzeugs mit dem Reinigungskontaktabschnitt (11) zu reinigen, **dadurch gekennzeichnet, dass** die Reinigungsvorrichtung (10) einen optischen Sensor (5) und eine Auswerteeinheit umfasst, wobei die Reinigungsvorrichtung (10) zur Ausführung eines Verfahrens nach einem der vorstehenden Ansprüche ausgebildet ist, wobei der Reinigungsvorrichtung für ein Karosseriebauteil der Oberflächenbereich (4) des Karosseriebauteils als Fügestelle für das stoffschlüssige Anbringen eines Bauelements an dem Karosseriebauteil vorgegeben wird.

11. Reinigungsvorrichtung (10) nach Anspruch 10, **gekennzeichnet durch** eine Kamera, als optischen Sensor (5).

12. Reinigungsvorrichtung (10) nach Anspruch 11, **dadurch gekennzeichnet, dass** die Kamera eine Smart-Kamera ist, wobei die Smart-Kamera die Auswerteeinheit umfasst.

13. Reinigungsvorrichtung (10) nach einem der Ansprüche 10 bis 12, **dadurch gekennzeichnet, dass** der optische Sensor (5) derart angeordnet ist, dass ein vor dem Reinigungskontaktabschnitt (11) liegender Reinigungsbereich von dem optischen Sensor (5) zur Bewertung einer notwendigen Reinigungsintensität erfasst wird, und/oder dass der optische Sensor (5) derart angeordnet ist, dass ein hinter dem Reinigungskontaktabschnitt (11) liegender Reinigungsbereich von dem optischen Sensor (5) zur Kontrolle eines Ergebnisses einer erfolgten Reinigung erfasst wird.

14. Reinigungsvorrichtung (10) nach einem der Ansprüche 10 bis 13, **gekennzeichnet durch** ein Reinigungsband (12) und eine Antriebseinheit (13), wobei das Reinigungsband (12) über den Reinigungskontaktabschnitt (11) geführt ist, wobei der Reinigungskontaktabschnitt (11) ausgebildet ist, einen zu reinigenden Oberflächenbereich für das Reinigen mit dem Reinigungsband (12) zu kontaktieren, und wobei die Antriebseinheit (13) ausgebildet ist, das Reinigungsband (12) mit einer vorgebbaren Bandgeschwindigkeit über den Reinigungskontaktabschnitt (11) zu bewegen.

15. Reinigungsvorrichtung (10) nach einem der Ansprüche 10 bis 14, **gekennzeichnet durch** eine Applikationseinheit (20) zum Applizieren eines Dichtungsprofils (8) auf einem dem Verschließen einer Karosserieöffnung dienenden Karosseriebauteil (1), wobei die Applikationseinheit (20) nachrangig zu dem Reinigungskontaktabschnitt (11) angeordnet ist.

## Claims

1. Method for inspecting a surface (2) of a body component (1) of a vehicle for the presence of contamination (3), wherein a surface region (4) of the surface (2) is defined as a joining site for the materially bonded attachment of a component (8), the defined surface region (4) is detected by an optical sensor (5) and the surface region (6) detected by the optical sensor is evaluated by an evaluation unit with respect to the presence of contamination (31).

2. Method according to claim 1, **characterized in that** during the evaluation an area fraction of contamination (31) in the surface region (6) detected by the optical sensor (5) is determined and the determined area fraction is subjected to a comparison with a predefined area fraction.

3. Method according to claim 2, **characterized in that** when the predefined area fraction is exceeded, the surface region (6) detected by the optical sensor (5) is assessed as contaminated; and/or that when the predefined area fraction is undershot, the surface region (6) detected by the optical sensor (5) is assessed as not contaminated.

4. Method according to one of the preceding claims, **characterized in that** the component (8) is adhesively bonded in the surface region (4) of the body component (1) defined as a joining site if the surface region (4) defined as a joining site is assessed as not contaminated.

5. Method according to one of the preceding claims, **characterized in that** the component (8) is not adhesively bonded in the surface region (4) of the body component (1) defined as a joining site if the surface region (4) defined as a joining site is assessed as contaminated.

6. Method according to one of the preceding claims, **characterized in that** the method is carried out after cleaning the surface region (4) of the body component (1) defined as a joining site.

7. Method according to one of the preceding claims, **characterized in that** the method is carried out before cleaning the surface region (4) defined as a joining site, wherein the cleaning of the surface region (4) defined as a joining site is controlled depending on the assessment with respect to the presence of contamination (31).

8. Method according to claim 6 or claim 7, **characterized in that** a cleaning device (10) is controlled to clean the surface region (4) defined as a joining site for which the presence of contamination (31) has been detected.

9. Method according to claim 8, **characterized in that** the cleaning device (10) has a cleaning contact section (11), over which a cleaning belt (12) for cleaning the surface region (4) defined as a joining site is guided, wherein the cleaning belt (12) is guided over the cleaning contact section (11) at a predetermined belt speed during cleaning, wherein the belt speed is controlled depending on the assessment with respect to the presence of contamination (31) for the surface region to be cleaned.

10. Cleaning device (10) having a cleaning contact section (11), wherein the cleaning device (10) is configured to clean a surface region of a body component (1) of a vehicle with the cleaning contact section (11), **characterized in that** the cleaning device (10) comprises an optical sensor (5) and an evaluation unit, wherein the cleaning device (10) is configured to carry out a method according to one of the preceding claims, wherein the surface region (4) of the body component is specified to the cleaning device for a body component as a joining site for the materially bonded attachment of a component to the body component.

11. Cleaning device (10) according to claim 10, **characterized by** a camera as the optical sensor (5).

12. Cleaning device (10) according to claim 11, **characterized in that** the camera is a smart camera, wherein the smart camera comprises the evaluation unit.

13. Cleaning device (10) according to one of claims 10 to 12, **characterized in that** the optical sensor (5) is arranged in such a way that a cleaning region located in front of the cleaning contact section (11) is detected by the optical sensor (5) for assessing a necessary cleaning intensity, and/or that the optical sensor (5) is arranged in such a way that a cleaning region located behind the cleaning contact section (11) is detected by the optical sensor (5) for checking a result of cleaning that has been carried out.

14. Cleaning device (10) according to one of claims 10 to 13, **characterized by** a cleaning belt (12) and a drive unit (13), wherein the cleaning belt (12) is guided over the cleaning contact section (11), wherein the cleaning contact section (11) is configured to contact a surface region to be cleaned for cleaning with the cleaning belt (12), and wherein the drive unit (13) is configured to move the cleaning belt (12) over the cleaning contact section (11) at a specifiable belt speed.

15. Cleaning device (10) according to one of claims 10 to 14, **characterized by** an application unit (20) for applying a sealing profile (8) to a body component (1) serving to close a body opening, wherein the application unit (20) is arranged downstream of the cleaning contact section (11).

## Revendications

1. Procédé d'inspection d'une surface (2) d'un élément de carrosserie (1) d'un véhicule pour détecter la présence d'une contamination (3), dans lequel une région de surface (4) de la surface (2) est définie comme une zone d'assemblage pour la fixation par liaison de matière d'un élément (8), la région de surface (4) définie est détectée par un capteur optique (5) et la région de surface (6) détectée par le capteur optique est évaluée par une unité d'évaluation quant à la présence d'une contamination (31).

2. Procédé selon la revendication 1, **caractérisé en ce que**, lors de l'évaluation, une fraction surfacique d'une contamination (31) dans la région de surface (6) détectée par le capteur optique (5) est déterminée et la fraction surfacique déterminée est soumise à une comparaison avec une fraction surfacique prédéfinie.

3. Procédé selon la revendication 2, **caractérisé en ce que**, lorsque la fraction surfacique prédéfinie est dépassée, la région de surface (6) détectée par le capteur optique (5) est évaluée comme contaminée; et/ou **en ce que**, lorsque la fraction surfacique prédéfinie n'est pas atteinte, la région de surface (6) détectée par le capteur optique (5) est évaluée comme non contaminée.

4. Procédé selon l'une des revendications précédentes, **caractérisé en ce que** l'élément (8) est collé sur la région de surface (4) de l'élément de carrosserie (1) définie comme une zone d'assemblage si la région de surface (4) définie comme une zone d'assemblage est évaluée comme non contaminée.

5. Procédé selon l'une des revendications précédentes, **caractérisé en ce que** l'élément (8) n'est pas collé sur la région de surface (4) de l'élément de carrosserie (1) définie comme une zone d'assemblage si la région de surface (4) définie comme une zone d'assemblage est évaluée comme contaminée.

6. Procédé selon l'une des revendications précédentes, **caractérisé en ce que** le procédé est exécuté après le nettoyage de la région de surface (4) de l'élément de carrosserie (1) définie comme une zone d'assemblage.

7. Procédé selon l'une des revendications précédentes, **caractérisé en ce que** le procédé est exécuté avant le nettoyage de la région de surface (4) définie comme une zone d'assemblage, dans lequel le nettoyage de la région de surface (4) définie comme une zone d'assemblage est commandé en fonction de l'évaluation quant à la présence d'une contamination (31).

8. Procédé selon la revendication 6 ou la revendication 7, **caractérisé en ce qu'**un dispositif de nettoyage (10) est commandé pour nettoyer la région de surface (4) définie comme une zone d'assemblage sur laquelle la présence d'une contamination (31) a été détectée.

9. Procédé selon la revendication 8, **caractérisé en ce que** le dispositif de nettoyage (10) présente une section de contact de nettoyage (11), sur laquelle une bande de nettoyage (12) destinée au nettoyage de la région de surface (4) définie comme une zone d'assemblage est guidée, dans lequel la bande de nettoyage (12) est guidée sur la section de contact de nettoyage (11) à une vitesse de bande prédéterminée pendant le nettoyage, dans lequel la vitesse de bande est commandée en fonction de l'évaluation quant à la présence d'une contamination (31) pour la région de surface à nettoyer.

10. Dispositif de nettoyage (10) présentant une section de contact de nettoyage (11), dans lequel le dispositif de nettoyage (10) est conçu pour nettoyer une région de surface d'un élément de carrosserie (1) d'un véhicule avec la section de contact de nettoyage (11), **caractérisé en ce que** le dispositif de nettoyage (10) comprend un capteur optique (5) et une unité d'évaluation, dans lequel le dispositif de nettoyage (10) est conçu pour exécuter un procédé selon l'une des revendications précédentes, dans lequel la région de surface (4) de l'élément de carrosserie est spécifiée au dispositif de nettoyage pour un élément de carrosserie comme une zone d'assemblage pour la fixation par liaison de matière d'un élément à l'élément de carrosserie.

11. Dispositif de nettoyage (10) selon la revendication 10, **caractérisé par** une caméra en tant que capteur optique (5).

12. Dispositif de nettoyage (10) selon la revendication 11, **caractérisé en ce que** la caméra est une caméra intelligente, dans lequel la caméra intelligente comprend l'unité d'évaluation.

13. Dispositif de nettoyage (10) selon l'une des revendications 10 à 12, **caractérisé en ce que** le capteur optique (5) est disposé de telle sorte qu'une région de nettoyage située devant la section de contact de nettoyage (11) est détectée par le capteur optique (5) pour évaluer une intensité de nettoyage nécessaire, et/ou **en ce que** le capteur optique (5) est disposé de telle sorte qu'une région de nettoyage située derrière la section de contact de nettoyage (11) est détectée par le capteur optique (5) pour contrôler un résultat d'un nettoyage effectué.

14. Dispositif de nettoyage (10) selon l'une des revendications 10 à 13, **caractérisé par** une bande de nettoyage (12) et une unité d'entraînement (13), dans lequel la bande de nettoyage (12) est guidée sur la section de contact de nettoyage (11), dans lequel la section de contact de nettoyage (11) est conçue pour entrer en contact avec une région de surface à nettoyer pour le nettoyage avec la bande de nettoyage (12), et dans lequel l'unité d'entraînement (13) est conçue pour déplacer la bande de nettoyage (12) sur la section de contact de nettoyage (11) à une vitesse de bande pouvant être spécifiée.

15. Dispositif de nettoyage (10) selon l'une des revendications 10 à 14, **caractérisé par** une unité d'application (20) destinée à appliquer un profilé d'étanchéité (8) sur un élément de carrosserie (1) servant à fermer une ouverture de carrosserie, dans lequel l'unité d'application (20) est disposée en aval de la section de contact de nettoyage (11).
